# EUROPÄISCHE PATENTANMELDUNG

(11) **EP 1 031 482 A2**
(43) Veröffentlichungstag der Anmeldung: **30.08.2000**
(21) Anmeldenummer: 99122215.9
(22) Anmeldetag: 06.11.1999
(51) Int. Cl.: B60S 1/52

(54) **Scheibenwaschanlage für eine Windschutzscheibe**

(30) Priorität: 23.02.1999 DE 19907694
(71) Anmelder: ROBERT BOSCH GMBH, 70442 Stuttgart (DE)
(72) Erfinder: Halek, Stephan, 70569 Stuttgart (DE)

(57) **Zusammenfassung**

Die Erfindung geht aus von einer Scheibenwaschanlage für eine Windschutzscheibe (18) eines Fahrzeugs (10) mit mindestens einer Spritzdüse (36), durch die aus mindestens einer Düsenöffnung (50) Wasser in einem Spritzstrahl (38) auf die Windschutzscheibe (18) gespritzt wird.

Es wird vorgeschlagen, daß die Düsenöffnung derart verstellbar ist, daß sich der Winkel (α), den die Richtung der Düsenöffnung (50) mit der Windschutzscheibe (18) einschließt, mit zunehmendem Fahrtwind (40) verkleinert.

## Beschreibung

### Stand der Technik

Die Erfindung geht aus von einer Scheibenwaschanlage für eine Windschutzscheibe nach dem Oberbegriff des Anspruchs 1.

Scheibenwaschanlagen für Fahrzeuge werden in der Regel in Verbindung mit Scheibenwischern verwendet. Sie werden betätigt, wenn die Feuchtigkeit durch Niederschläge nicht ausreicht, die Fahrzeugscheibe zu säubern. Sie beinhalten einen Wasserbehälter, Spritzdüsen und eine Pumpe, die Wasser, dem unter Umständen Reinigungs- und Antigefriermittel beigesetzt sind, mit Druck aus dem Wasserbehälter zu den Spritzdüsen fördert. Der Förderdruck der Pumpe ist auf die Spritzdüsen abgestimmt und die Spritzdüsen sind so ausgerichtet, daß sie bei Stillstand des Fahrzeugs das Wasser großflächig über den Wischbereich der Scheibenwischer verteilen, ohne daß Passanten vom Wasser getroffen werden.

Bei starkem Wind oder erhöhter Fahrgeschwindigkeit wird der Spritzkegel verweht und an die Scheibe angepreßt, so daß nur ein kleiner, unterer und unzureichender Bereich der Scheibe benetzt wird. Richtet man die Spritzdüse so aus oder erhöht man den Druck, daß bei erhöhter Geschwindigkeit ein ausreichender Bereich mit Wasser benetzt wird, besteht bei gleichem Spritzdruck und niedrigerer Geschwindigkeit oder im Stillstand des Fahrzeugs die Gefahr, daß Wasser von der Scheibe zurückprallt oder über die Scheibe hinweg gespritzt wird und Passanten trifft. Dabei steigt der Wasserverbrauch, da zuviel Wasser gefördert und ein Großteil des versprühten Wassers nicht genutzt wird. Als Folge davon muß der Wasserbehälter sehr groß dimensioniert oder sehr häufig nachgefüllt werden. Hinzu kommt, daß auch mehr die Umwelt belastende Reinigungsmittel und Antigefriermittel gebraucht werden.

### Vorteile der Erfindung

Nach der Erfindung verkleinert sich der Winkel, den die Richtung der Düsenöffnung der Spritzdüse mit der Windschutzscheibe einschließt, mit zunehmendem Fahrtwind. Dadurch würde der Spritzstrahl ohne Berücksichtigung des Fahrtwinds den oberen Bereich der Windschutzscheibe treffen oder sogar über das Dach des Fahrzeugs hinweg spritzen. Der Fahrtwind allerdings lenkt den Spritzstrahl gegen die Windschutzscheibe, so daß trotz des kleineren Winkels der Spritzstrahl die Mitte des Wischfeldes trifft.

In Ausgestaltung der Erfindung ist die Spritzdüse auf einem flächigen, nachgiebigen Bauteil montiert, das seine Neigung in Bezug auf die Windschutzscheibe unter dem Einfluß des Fahrtwinds verändert. Das Bauteil, das selbst elastisch sein kann oder elastisch mit einer Motorhaube verbunden ist, wird an dem Ende, das dem Fahrtwind zugewandt ist, stärker niedergedrückt als an dem Ende, das der Windschutzscheibe zugewandt ist. Die Nachgiebigkeit wird so auf den Druck des Fahrtwinds abgestimmt, daß die Düsenöffnung entsprechend dem Fahrtwind eine geeignete Neigung zur Windschutzscheibe einnimmt. Die Kraft, die der Fahrtwind auf das Bauteil ausübt, hängt neben der Stärke des Fahrtwinds von der Größe der angeströmten Fläche des Bauteils sowie von seinem Luftwiderstand ab.

Gemäß einer Ausgestaltung der Erfindung ist das Bauteil um eine Achse eines Gelenks schwenkbar mit der Motorhaube verbunden und stützt sich über ein Federelement ab, das der Kraft des Fahrtwinds entgegenwirkt. Die Nachgiebigkeit des Bauteils kann leicht durch eine Modifikation die Federsteifigkeit des Federelements auf die Gegebenheiten des Fahrzeugs abgestimmt werden. Dabei ist es ferner vorteilhaft, daß die Federsteifigkeit und Vorspannung des Federelements einstellbar sind. Vorteilhaft ist die Schwenkbewegung des Bauteils durch einen Anschlag begrenzt, gegen den das Federelement das Bauteil in der Ruheposition oder bei geringem Fahrtwind drückt.

Um den Luftwiderstand des Bauteils zu erhöhen und damit die Wirkung des Fahrtwinds zu verbessern, besitzt das Bauteil eine Wölbung, die dem Fahrtwind eine größere Angriffsfläche bietet. Ferner ist es zweckmäßig, sowohl auf der Fahrerseite als auch auf der Beifahrerseite ein nachgiebiges Bauteil mit einer Spritzdüse vorzusehen, so daß weitgehend das ganze Wischfeld besprüht wird.

### Zeichnung

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:

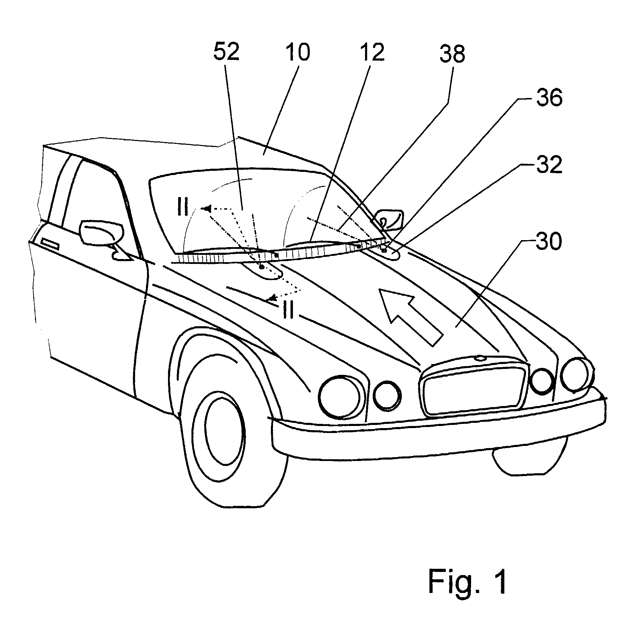

- Fig. 1: eine perspektivische Teilansicht eines Fahrzeugs mit einer erfindungsgemäßen Scheibenwaschanlage,
- Fig. 2: einen schematischen Schnitt entsprechend der Linie II-II in Fig. 1 und
- Fig. 3: eine Variante zu Fig. 2.

### Beschreibung der Ausführungsbeispiele

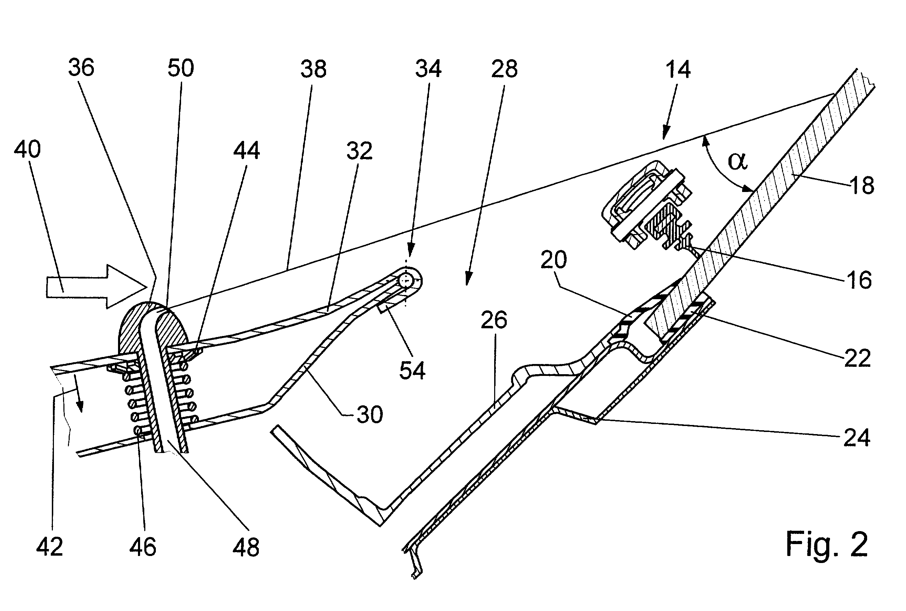

An einem Fahrzeug 10 ist auf der Fahrer- und Beifahrerseite jeweils ein Scheibenwischer 12 vorgesehen, dessen Wischblatt 14 mit einer Wischlippe 16 ein Wischfeld 52 auf einer Windschutzscheibe 18 überstreicht. Auf einer Motorhaube 30 sind auf beiden Fahrzeugseiten Spritzdüsen 36 angeordnet, deren Spritzstrahlen 38 das Wischfeld 52 ungefähr in seiner Mitte treffen. Die Spritzdüsen 36 werden betätigt, wenn beim Wischen die natürliche Feuchtigkeit durch Niederschlag oder Spritzwasser für die Scheibenwischer 12 nicht ausreicht, um ein gutes Wischergebnis zu erlangen. Damit die Spritzstrahlen 38 auch bei einem größeren Fahrtwind 40 das Wischfeld 52 in einem günstigen Bereich treffen und benetzen, sind die Spritzdüsen 36 auf einem Bauteil 32 in Form einer Klappe (Fig. 2) montiert.

Die Klappe 32 ist mit einem Gelenk 34 an der Motorhaube 30 an dem Ende verbunden, das der Windschutzscheibe 18 zugewandt ist. Die Spritzdüse 36, die mit einem Befestigungselement 44 an der Klappe 32 befestigt ist, führt mit einem Wasserkanal 48 durch die Motorhaube 30 und ist an einer nicht näher dargestellten, üblichen Wasserversorgung angeschlossen. Ein Federelement 46 in Form einer Schraubenfeder umgibt den Wasserkanal 48 und drückt die Klappe 32 entgegen einen Anschlag 54 oder gegen einen Anschlag, der durch eine Stellschraube 62 gebildet wird. Durch die Stellschraube 62, die alternativ zum Anschlag 54 vorgesehen wird, kann die Vorspannung des Federelements verändert und auf die Fahrzeugverhältnisse eingestellt werden. So wird festgelegt, bei welcher Stärke des Fahrtwinds 40 die Klappe 32 anspricht und die Richtung der Düsenöffnung 50 verändert wird.

In der Ausgangslage ist die Düsenöffnung 50 der Spritzdüse 36 auf das Wischfeld 52 der Windschutzscheibe 18 gerichtet. Die Richtung der Düsenöffnung 50, die ohne Einwirkung des Fahrtwinds 40 mit dem Spritzstrahl 38 im wesentlichen übereinstimmt, bildet mit der Windschutzscheibe 18 einen Winkel α. Der Fahrtwind 40 erzeugt an der Klappe 32 eine Kraft 42, die mit zunehmendem Fahrtwind größer wird und die Klappe 32 um das Gelenk 34 auf die Motorhaube 30 zu nach unten schwenkt, sobald sie die Vorspannung des Federelements überwindet. Dadurch wird der Spritzstrahl 38 mehr zum oberen Rand der Windschutzscheibe 18 verlagert, so daß der Winkel α zwischen der Richtung der Düsenöffnung 50 und der Windschutzscheibe 18 kleiner wird. Da der Fahrtwind 40 gleichzeitig auf den Spritzstrahl 38 wirkt, wird dieser zur Windschutzscheibe 18 hin abgelenkt. Damit trifft er wieder annähernd auf die gleiche Stelle des Wischfelds 52 wie ohne Einfluß des Fahrtwinds 40.

Die Federcharakteristik ist so auf die Fahrzeugverhältnisse abzustimmen, daß der Spritzstrahl 38 bei allen Geschwindigkeiten des Fahrtwinds 40 in einem günstigen Bereich des Wischfelds 52 der Windschutzscheibe 18 auftrifft. Zweckmäßigerweise ist die Federsteifigkeit des Federelements 46 einstellbar, indem seine wirksame Federlänge durch ein Stellelement 64 verändert wird.

Die Windschutzscheibe 18 ist über eine elastische Klebeschicht 22 an einer Fahrzeugkarosserie 24 befestigt und nach außen durch eine Dichtung 20 abgedichtet. Ein sogenannter Haubenspalt 28 zwischen der Motorhaube 30 und der Windschutzscheibe 18 ist durch eine Abdeckung 26 zu einem nicht näher dargestellten Motorenraum verschlossen.

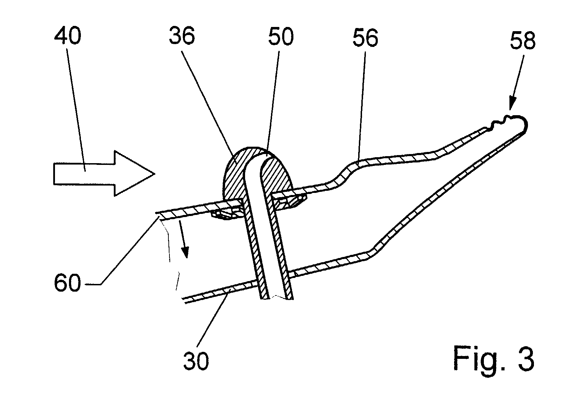

Bei der Varianten nach Fig. 3 ist ein Bauteil 60 über eine elastische Anbindung 58 an der Motorhaube befestigt, auf dem die Spritzdüse 36 sitzt. Die elastische Anbindung 58 übernimmt die Funktionen des Gelenks 34 und des Federelements 46. Eine Wölbung 56, die steiler zur Richtung des Fahrtwinds 40 steht, erhöht den Luftwiderstand und vergrößert somit die Kraft 42, die der Fahrtwind 40 auf das Bauteil 60 ausübt.

### Bezugszeichen

- 10: Fahrzeug
- 12: Scheibenwischer
- 14: Wischblatt
- 16: Wischlippe
- 18: Windschutzscheibe
- 20: Dichtung
- 22: Schicht
- 24: Fahrzeugkarosserie
- 26: Abdeckung
- 28: Haubenspalt
- 30: Motorhaube
- 32: Klappe
- 34: Gelenk
- 36: Spritzdüse
- 38: Spritzstrahlen
- 40: Fahrtwind
- 42: Kraft
- 44: Befestigungselement
- 46: Federelement
- 48: Wasserkanal
- 50: Düsenöffnung
- 52: Wischfeld
- 54: Anschlag
- 56: Wölbung
- 58: elastische Anbindung
- 60: Bauteil
- 62: Stellschraube
- 64: Stellelement

## Patentansprüche

1. Scheibenwaschanlage für eine Windschutzscheibe (18) eines Fahrzeugs (10) mit mindestens einer Spritzdüse (36), durch die aus mindestens einer Düsenöffnung (50) Wasser in einem Spritzstrahl (38) auf die Windschutzscheibe (18) gespritzt wird, dadurch gekennzeichnet, daß die Düsenöffnung derart verstellbar ist, daß sich der Winkel (α), den die Richtung der Düsenöffnung (50) mit der Windschutzscheibe (18) einschließt, mit zunehmendem Fahrtwind (40) verkleinert.

2. Scheibenwaschanlage nach Anspruch 1, dadurch gekennzeichnet, daß die Spritzdüse (36) auf einem flächigen, nachgiebigen Bauteil (32, 60) montiert ist, das seine Neigung in bezug auf die Windschutzscheibe (18) unter dem Einfluß des Fahrtwinds (40) verändert.

3. Scheibenwaschanlage nach Anspruch 2, dadurch gekennzeichnet, daß das Bauteil (60) elastisch ist oder elastisch mit einer Motorhaube (30) verbunden ist.

4. Scheibenwaschanlage nach Anspruch 2, dadurch gekennzeichnet, daß das Bauteil (32) um eine Achse eines Gelenks (34) schwenkbar mit der Motorhaube (30) verbunden ist und sich über ein Federelement (46) abstützt, das der Kraft des Fahrtwinds (40) entgegenwirkt.

5. Scheibenwaschanlage nach Anspruch 4, dadurch gekennzeichnet, daß die Schwenkbewegung des Bauteils (32) durch einen Anschlag (54) begrenzt ist.

6. Scheibenwaschanlage nach Anspruch 4 oder 5, dadurch gekennzeichnet, daß die Vorspannung des Federelements (46) einstellbar ist.

7. Scheibenwaschanlage nach einem der Ansprüche 4 bis 6, dadurch gekennzeichnet, daß die Federsteifigkeit des Federelements (46) einstellbar ist.

8. Scheibenwaschanlage nach einem der vorhergehenden Ansprüche, dadurch gekennzeichnet, daß das Bauteil (60) eine den Luftwiderstand erhöhende Wölbung (56) aufweist.

9. Scheibenwaschanlage nach einem der vorhergehenden Ansprüche, dadurch gekennzeichnet, daß sowohl auf der Fahrerseite als auch auf der Beifahrerseite ein nachgiebiges Bauteil (32, 60) mit einer Spritzdüse (36) vorgesehen ist.

10. Scheibenwaschanlage nach einem der Ansprüche 4 bis 9, dadurch gekennzeichnet, daß die Achse des Gelenks (34) im Bereich zwischen der Spritzdüse (36) und der Windschutzscheibe (18) angeordnet ist.
